# EUROPEAN PATENT APPLICATION

(11) **EP 2 135 768 A1**
(43) Date of publication of application: **23.12.2009**
(21) Application number: 08425440.8
(22) Date of filing: 20.06.2008
(51) Int. Cl.: B60K 17/34

(54) **Reduction unit for transmissions of industrial vehicles**

(71) Applicant: Scam S.p.A., 21056 IndunoOlona (VA) (IT)
(72) Inventor: Grotto, Romano, 21056 Induno Olona (Varese) (IT); Brenna, Oliviero, 21056 Induno Olona (Varese) (IT)
(74) Representative: Crippa, Paolo Ernesto

(57) **Abstract**

A reduction unit (10) for a transmission of a vehicle (1), particularly an industrial vehicle, comprises a power entrance (11), and two power exits (12, 13); a first reduction stage (ST1) of an epicycloidal type which is operatively arranged in series to the power entrance (11), and having a first transmission ratio (τ1) which is variable in response to a first stage control action (COM1), a second reduction stage (ST2) operatively arranged in series to and downstream the first reduction stage (ST1), and having a constant second transmission ratio (τ2), a third reduction stage (ST3) operatively arranged in series to and downstream the second reduction stage (ST2), and having a third transmission ratio (τ3) which is variable in response to a third stage control action (COM3). The third reduction stage (ST3) comprises a third stage first (ST3') and a second (ST3") mechanisms having constant transmission ratios (τ3',τ3") alternately engageable by a synchronizer (SYNCR). The reduction unit (10) further comprises a differential (DIFF) of an epicycloidal type, which is operatively arranged downstream the third reduction stage (ST3) between the first (12) and second (13) power exits, and reversibly lockable in response to a differential control action (COM DIFF).

## Description

The object of the present invention is a reduction unit for transmissions, particularly transmissions of industrial vehicles, such as heavy transports vans, truck tractors, or the like.

Industrial vehicles are generally required to ensure a higher functioning versatility than private vehicles, such as cars. In fact, they must usually be able to move easily along uneven (for example, at building sites), sandy, steep, or very sloping grounds. Therefore, it is rather usual that they show several driving axles; particularly, it is common that they have four driving wheels.

Furthermore, the need particularly felt is that industrial vehicles are able to move at very slow speeds.

In addition to what has been mentioned above, it is of course required that industrial vehicles are able to move on standard civic roads, thereby ensuring performance and behaviours comparable to those vehicles that are mainly intended for the transport on asphalt (city streets, highways, national roads, or the like).

In order to provide the vehicle on which they are installed with all the above mentioned functionalities, the transmissions of industrial vehicles result extremely complicated. In fact, they have a gearbox that must be equipped with a high number of speeds, and therefore an extremely high number of gears. In addition to the gearbox, transmissions must have further almost unavoidable members, particularly a plurality of differentials, the number of which increases as the vehicle transmission's complexity increases. For example, for a four driving wheel vehicle, a differential arranged between front axle and rear axle, and two further differentials arranged on each driving axle are usually required.

It shall be apparent that, in order to have a high number of gears, the transmissions are particularly cumbersome and heavy. Consequently, they turn out to be a compromise between the speed number (which should be high), and dimensions/weights (which should be low). In order to obtain acceptable dimensions and weights, the number of speeds generally turns out to be sacrificed.

The object of the present invention is therefore to provide such a reduction unit for transmissions of industrial vehicles as to overcome the drawbacks mentioned with reference to the prior art.

Particularly, the object of the present invention is to provide a reduction unit which, when inserted in transmissions for industrial vehicles, allows the latter to ensure on the whole a high number of speeds with sufficiently limited overall dimensions and weights.

These and other objects are achieved through a reduction unit for transmission of commercial vehicles according to claim 1.

In order to better understand the invention, and appreciate the advantages thereof, some exemplary, non-limiting embodiments thereof will be described herein below, with reference to the annexed Figures, in which:

Fig. 1 is a side schematic view, partially in transparency, of an industrial vehicle;

Fig. 2 is a block diagram representative of a reduction unit functioning according to the invention;

Fig. 3 is a schematic, sectional view of a reduction unit according to a first possible embodiment of the invention.

Fig. 4 is a schematic, sectional view, taken along the line IV-IV, of the reduction unit in Fig. 3;

Fig. 5 is a schematic, sectional view taken along the line V-V of the reduction unit in Fig. 4;

Fig. 6 is a schematic, partially sectional view of a detail of the reduction unit in Fig. 5;

Fig. 7a is a schematic, sectional view, according to the arrow VIIa, of a detail of the reduction unit in Fig. 3;

Fig. 7b is a schematic, sectional view, according to the arrow VIIb, of a portion of the reduction unit detail in Fig. 7a;

Fig. 8 is a schematic, sectional view of a reduction unit detail according to the invention in a particular condition of use;

Fig. 9 is a schematic, sectional view of the reduction unit detail of Fig. 8 in a further possible condition of use;

Fig. 10 is a schematic, sectional view of the reduction unit detail of Fig. 8 in a further possible condition of use;

Fig. 11 is a schematic, sectional view of the reduction unit detail of Fig. 8 in a further possible condition of use;

Fig. 12 is a schematic, sectional view of a reduction unit in accordance with a second possible embodiment of the invention;

Fig. 13 is a schematic, sectional view, taken along the line XIII-XIII, of the reduction unit in Fig. 12;

Fig. 14 is a schematic, sectional view, taken along the line XIV-XIV, of the reduction unit in Fig. 12;

Fig. 15 is a schematic, partially sectional view of a reduction unit detail of Fig. 14;

Fig. 16a is a schematic, sectional view, according to the arrow XVIa, of a detail of the reduction unit in Fig. 12;

Fig.16b is a schematic, sectional view, according to the arrow XVIb, of a portion of a reduction unit detail of Fig. 16a.

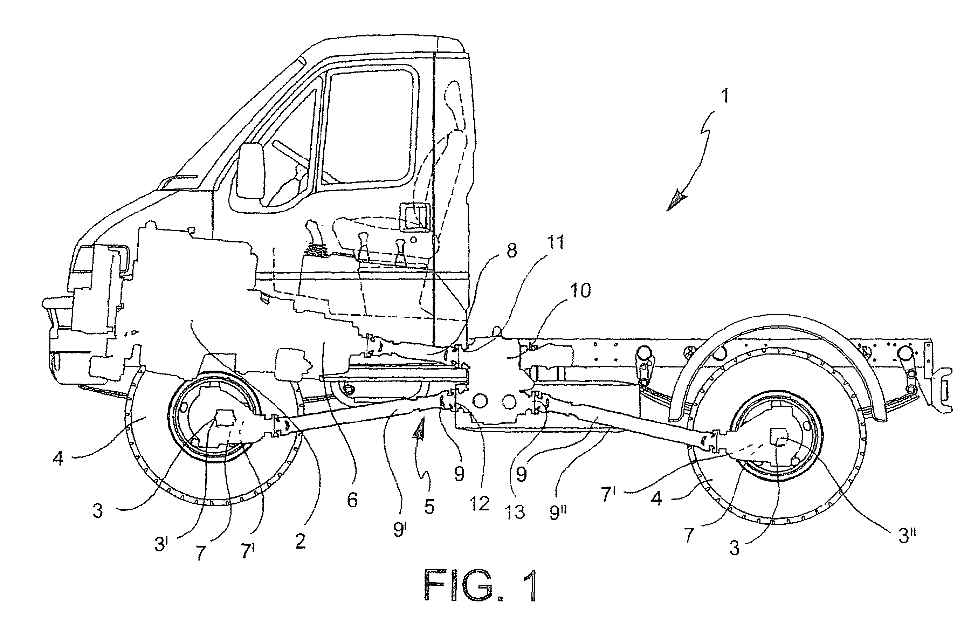

With reference to Fig. 1, an industrial vehicle is generally indicated with the reference numeral 1. The vehicle 1 can, for example, be a van, a truck tractor, or a general vehicle intended to heavy transports. Vehicle 1 is particularly suitable to be used on impracticable and/or sloping and/or sandy and/or uneven grounds. For example, the vehicle 1 is intended to be used off road or at yards. In addition, vehicle 1 is also intended to operate on standard roads, such as highways, urban, extra-urban roads, or the like.

Vehicle 1 comprises an engine 2, and one or more driving axles 3, to the ends of which driving wheels 4 are connected. Preferably, the vehicle 1 is of the four driving wheels type, therefore it has a front driving axle 3' and a rear driving axle 3".

Between engine 2 and driving axles 3' and 3", a transmission 5 is arranged. The transmission 5 comprises a gearbox 6 operatively connected to the engine 2, and one or more differentials 7, preferably a front differential 7' and a rear differential 7" respectively arranged on the front driving axle 3' and the rear driving axle 3''. The function of the differentials arranged on the driving axles is known to those skilled in the art, therefore, the description thereof is omitted. Similarly, the description of the gearbox 6 structure and functioning is omitted, which are also known to those skilled in the art, is omitted. The gearbox 6 preferably has six speeds (beside the reverse speed), but it can be provided, if needed, with a different number of speeds (generally, but not necessarily, ranging between four and seven).

Between gearbox 6 and driving axles 3, a reduction unit 10 according to the invention is advantageously arranged.

The reduction unit 10 is adapted to receive power from the gearbox 6 (which, in turn, receive it from the engine 2) at a power entrance 11 thereof. The connection between gearbox 6 and reduction unit 10 can take place, for example, through an input transmission shaft 8. Furthermore, the reduction unit 10 is adapted to supply power to the driving axles 3' and 3", and to this aim it comprises first 12 and second 13 power exits. It has to be noted that the reduction unit 10 according to the invention is herein described with reference to a four driving wheel industrial vehicle, but it can be usefully adopted on industrial vehicles with a single driving axle, i.e. two driving wheels, only by setting either the power exits 12 or 13 free.

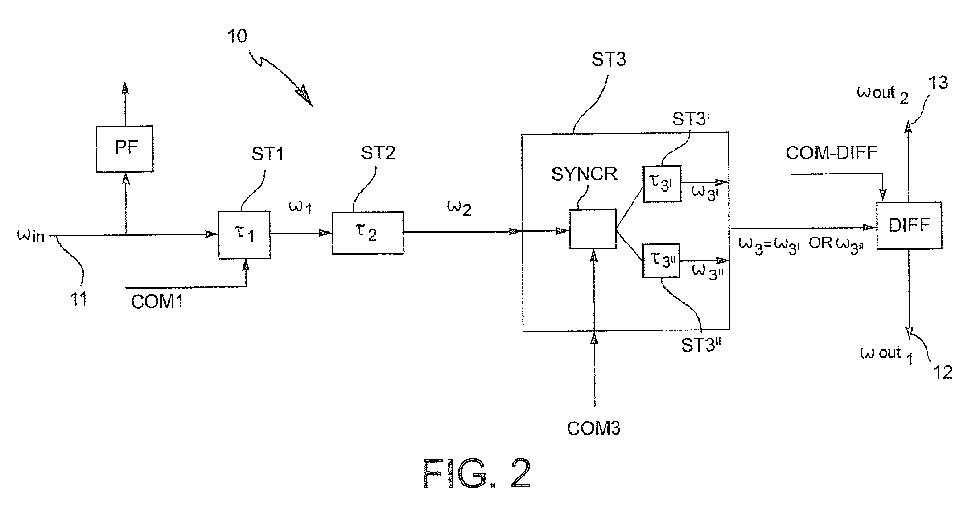

Referring to Fig. 2, a functional description of the reduction unit 10 according to the invention will be now provided.

The reduction unit 10 comprises a first reduction stage ST1 operatively arranged in series at the power entrance 11 and downstream thereof. In other words, at the power entrance 11, a given power coming from the gearbox 6 enters the reduction unit 10, which power flows to the first reduction stage ST1. Such power enters the reduction unit 10 with an input speed ωᵢₙ.

It has to be noted that in the present description, and in the annexed claims, the terms "upstream" and "downstream" are conventionally referred to a power flow that runs from engine 2 to driving wheels 4.

The first reduction stage ST1 has a first transmission ratio τ1 and it consequently provides, in output, a speed ω1 which is generally different from the input speed ωᵢₙ (but, as it will be subsequently described, a synchronism between the ω1 and ωᵢₙ speeds is also possible). The first transmission ratio τ1 of the first transmission stage ST1 is advantageously variable, and it can be changed in response to a first stage control action COM1, which can be provided by the vehicle's driver, for example, by acting on a special lever arranged inside the vehicle compartment 1, or a push button acting on an electrohydraulic or electropneumatic system, or different control systems. As will be described in more detail below, the first reduction stage ST1 is of the epicycloidal type.

Downstream the first reduction stage ST1 and operatively in series thereto, the reduction unit 10 comprises a second reduction stage ST2 having a second reduction ratio τ2. Thereby, the speed entering the second reduction stage ST2, ω1, becomes a speed ω2 different from ω1 when exiting therefrom. The second transmission ratio τ2 is advantageously constant, therefore it cannot be changed by the user's control actions. The modes for achieving such second transmission ratio τ2 will be described in greater detail with reference to some possible constructive embodiments of the reduction unit according to the invention.

Downstream the second reduction stage ST2 and operatively in series thereto, the reduction unit 10 comprises a third reduction stage ST3 having a third transmission ratio τ3, so that the speed entering the third reduction stage, ω2, will come out as ω3. The third transmission ratio τ3 is advantageously variable in response to a third stage control action COM3, which can be also provided by the vehicle's 1 user, for example, by acting on a further lever arranged inside the vehicle 1 compartment, or a push button acting on an electric-hydraulic or electric-pneumatic system, or different control systems. To this aim, the third reduction stage ST3 comprises first ST3' and second ST3'' mechanisms having constant transmission ratios τ3' and τ3'' which can be alternately engaged by a synchronizer SYNCR in response to the above-mentioned third stage control action COM3. Therefore, the first ST3' and second ST3'' mechanisms are respectively able to output two different speeds ω3' or ω3''. The speed ω3 exiting the third reduction stage ST3 is therefore equal to ω3' or ω3'', as a function of which of the first ST3' and the second ST3'' mechanisms is engaged by the synchronizer SYNCR. The possible constructive embodiments of the first and second third stage ST3 mechanisms will be described in more detail below, with reference to preferred embodiments of the invention.

Downstream the third reduction stage ST3, the reduction unit 1 comprises a differential of the epicycloidal type DIFF operatively arranged between the first and second power exits 12 and 13, in order to achieve the output speed ωₒᵤₜ₁ or ωₒᵤₜ₂ differentiation at the power exits 12 and 13, and therefore the front 3' and rear 3" driving axles rotation whenever the vehicle 3 operative conditions require it. The differential DIFF is advantageously so shaped such as to be reversibly lockable in response to a differential control action COMM DIFF which can be imparted by the vehicle's driver, for example, by acting on a further lever provided inside the compartment, or a push button acting on an electrohydraulic or electropneumatic system, or different control systems. When the differential is locked, the front and rear driving axles turn out to be synchronized, therefore they are not able to perform relative rotations. Also the possible embodiments for the differential DIFF will be described in more detail herein below.

According to a possible embodiment, the reduction unit 10 further comprises a power take-off PF, preferably operatively arranged upstream the first reduction stage ST1. The power take-off PF may serve several functions. For example, tool means for soil cultivation, or general outer actuating means of a different nature can be connected to the power take-off PF. The connection between power take-off and actuating means can be implemented purely mechanically, or, for example, a pump which is supplied by the same power take-off and which, in turn, has the function of hydraulically actuating further mobile members can be connected to the power take-off. The power take-off PF can be optionally kept free and, in such a case, all of the power which is not used anymore flows, of course with the exception of the losses due to mechanical efficiencies, at the driving wheels.

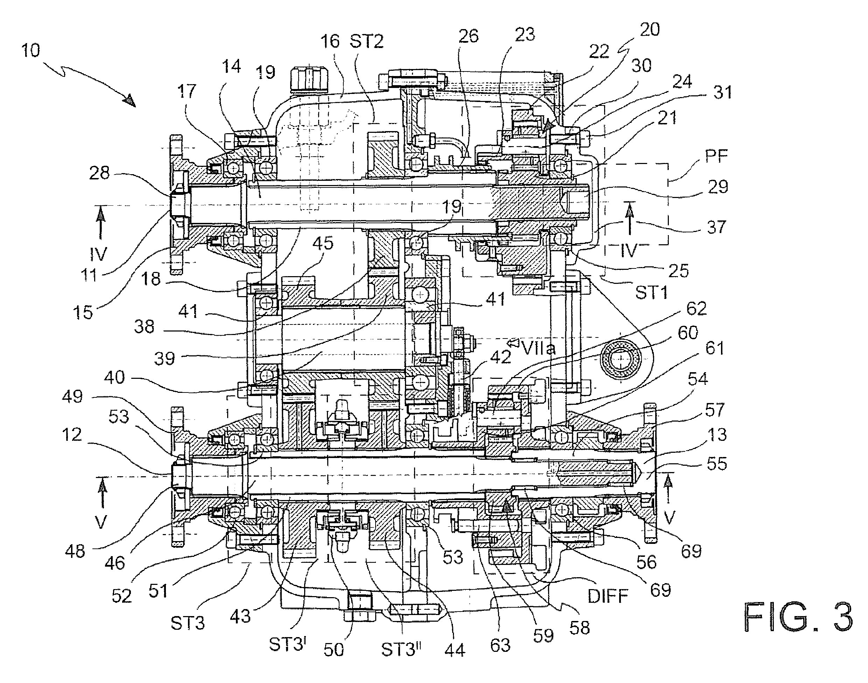

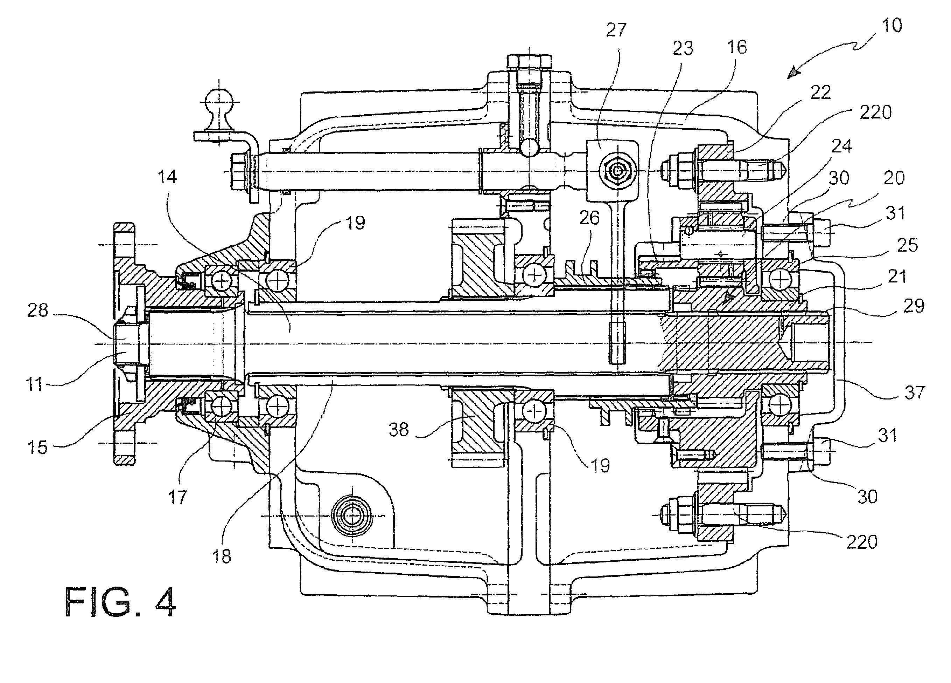

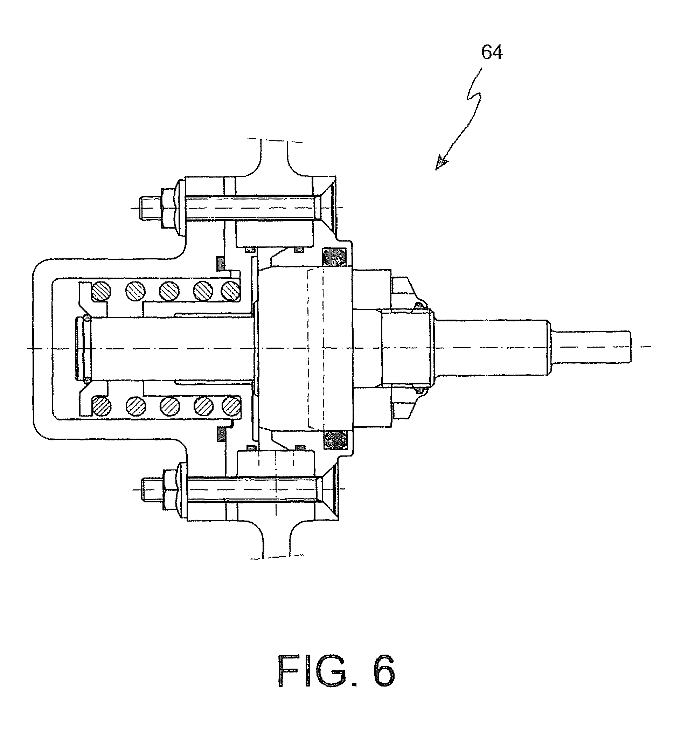

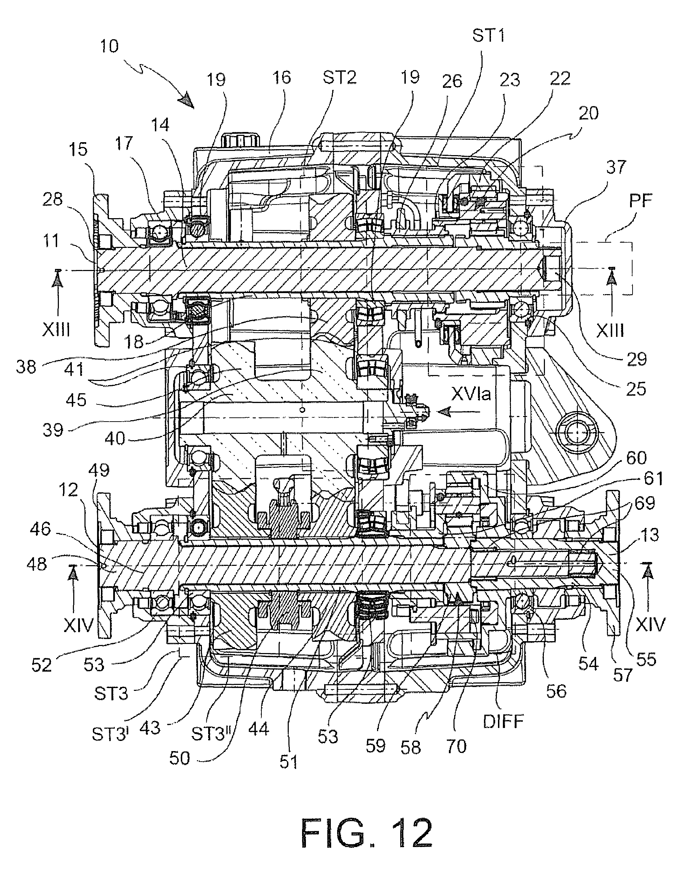

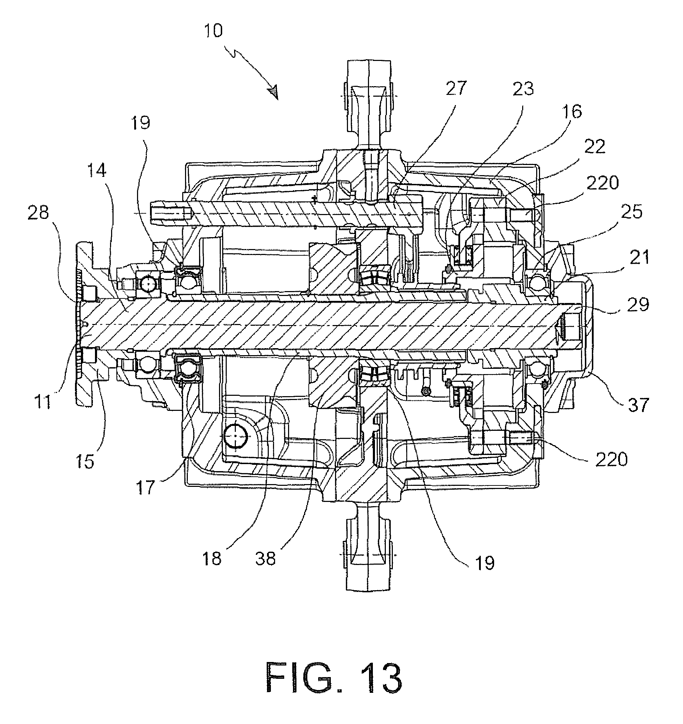

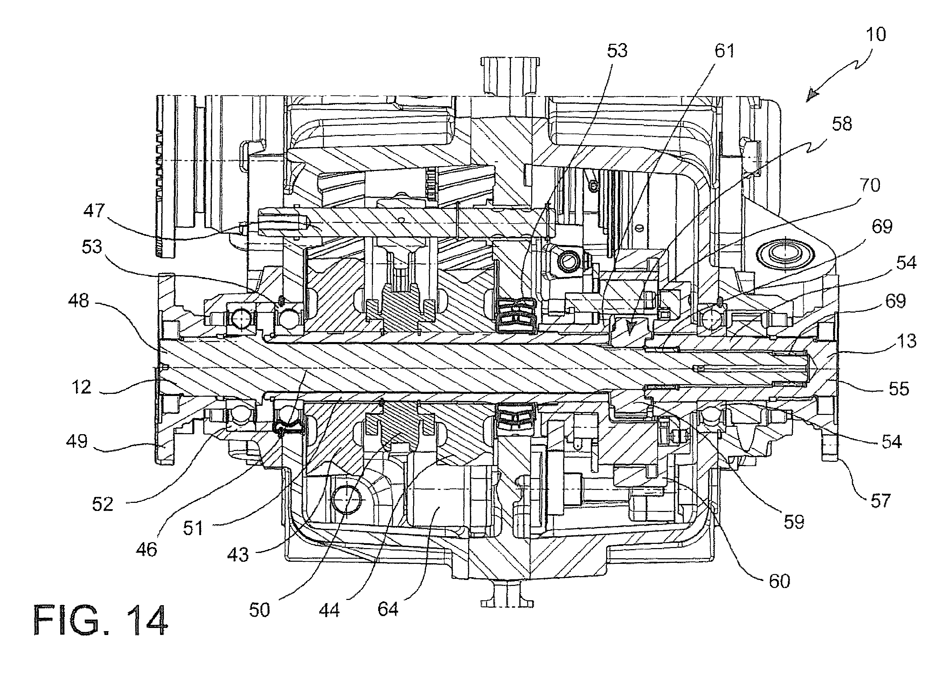

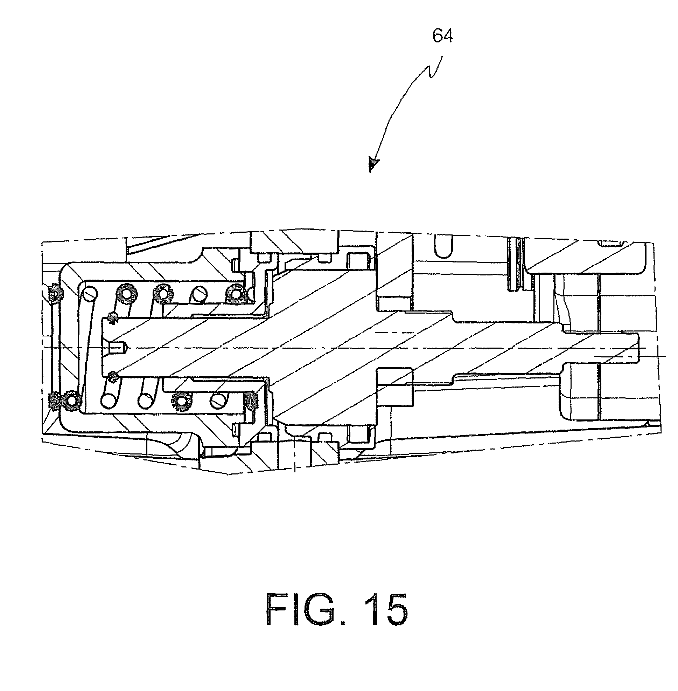

Referring to the Figs. 3 to 7, and to the Figs. 12 to 16, some preferred constructive embodiments of the reduction unit 10 according to the invention will be now described.

In accordance with a possible embodiment, the first reduction stage ST1 comprises an input shaft 14 adapted to receive the power entering the reduction unit 1 at the power entrance 11. Preferably, the power entrance 11 is arranged at a first end 28 of the input shaft 14. In other words, the incoming speed ωᵢₙ is transmitted to the input shaft 14 at the first end 28 thereof. For example, the input shaft 14 can be connected to the above-described input transmission shaft 8 via a flange 15, so that the input transmission shaft rotation translates in an equal rotation of the input shaft 14.

The input shaft 14 is rotatably connected to a support housing 16 of the reduction unit 10, for example, through bearings 17 of a rolling type.

Coaxially to the input shaft 14, the first reduction stage ST1 comprises a sleeve 18, which is also rotatably connected to the support housing 16 via further bearings 19. The sleeve 18 is preferably arranged such as to wrap the input shaft 14 across the all length thereof.

Advantageously, input shaft 14 and sleeve 18 are operatively connected through a first stage epicycloidal device 20, which is adapted to provide the first variable transmission ratio τ1 therebetween. The first stage epicycloidal gear 20 is advantageously of a satellite type, and has an inner wheel 21 with outer toothing, an outer wheel 22 with inner toothing, and a planet carrier 23 which supports satellite pinions 24 that are arranged between the inner wheel 21 outer toothing and the outer wheel 22 inner toothing. The outer wheel 22 is connected in a substantially rigid manner to the housing 16, preferably through screws 220, while the inner wheel 21 is rotatably connected to the housing 16, for example, through further bearings 25. The input shaft 14 is rotatably integrally connected to the inner wheel 21.

The first stage epicycloidal gear 20 can have two distinct configurations. According to a first configuration, the first stage epicycloidal device 20 acts as a reducer between the input shaft 14 and the sleeve 18. Alternatively, the first stage epicycloidal gear 20 can take a second configuration, in which the input shaft 14 and the sleeve 18 become rotatably mutually integral (therefore, the first stage transmission ratio τ1 becomes unitary).

In order to make such two distinct configurations of the first stage epicycloidal reducer 20 possible, actuating means are advantageously provided which act on a clutch 26, particularly an actuator 27 actionable by the vehicle's user. The actuation of the actuator 27 corresponds to the above-described first stage control action COM1. The clutch 26, controlled by the actuator 27, can take a first position and a second position. When the clutch 26 is in the first position, it makes the sleeve 18 and the planet carrier 23 rotatably integral, therefore, first stage epicycloidal gear 20 acts as a reducer. When it is in the second position, the clutch 26 makes the sleeve 18 and the inner wheel 21 rotatably integral, and the first stage epicycloidal reducer therefore implements a direct drive therebetween. In this manner, the input shaft 14 and the sleeve 18 are also made rotatably integral.

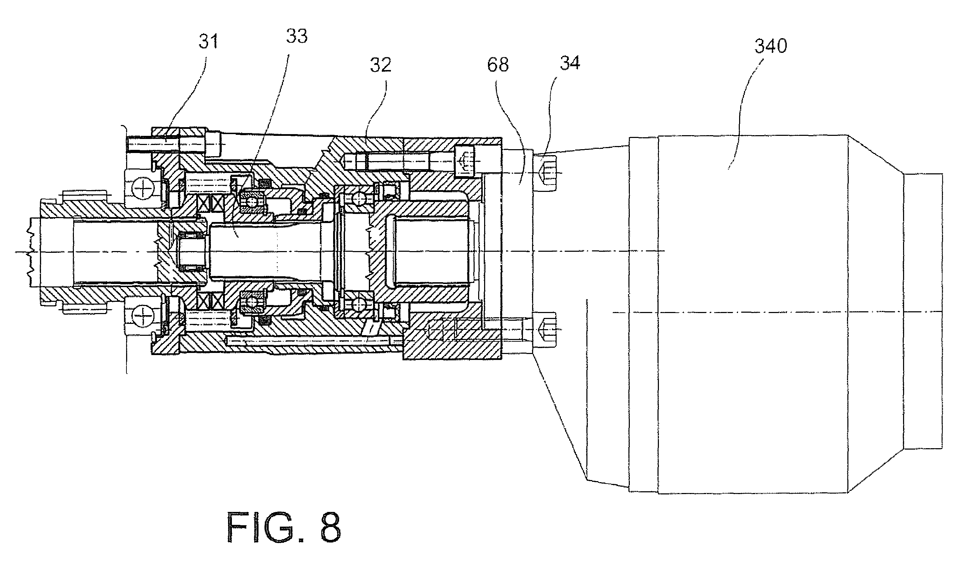

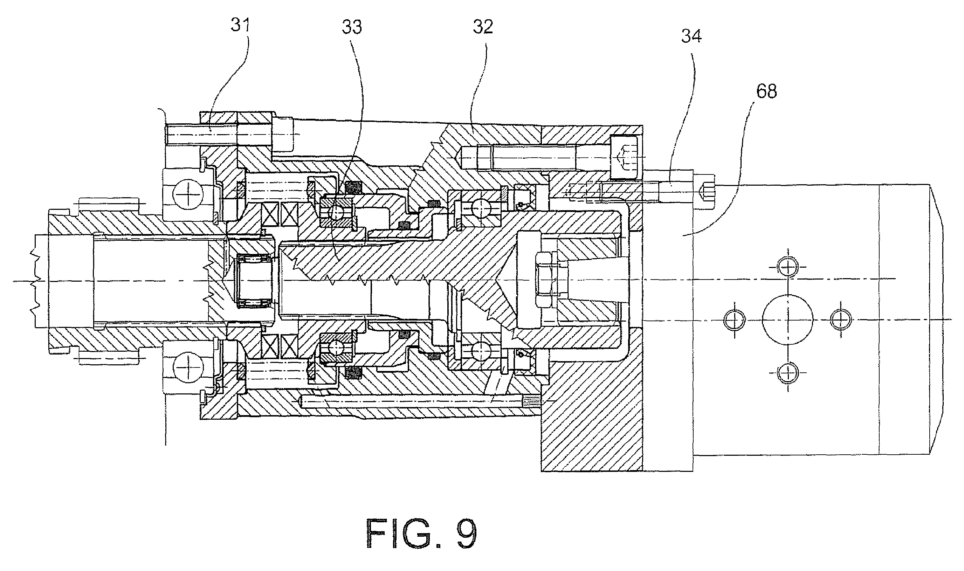

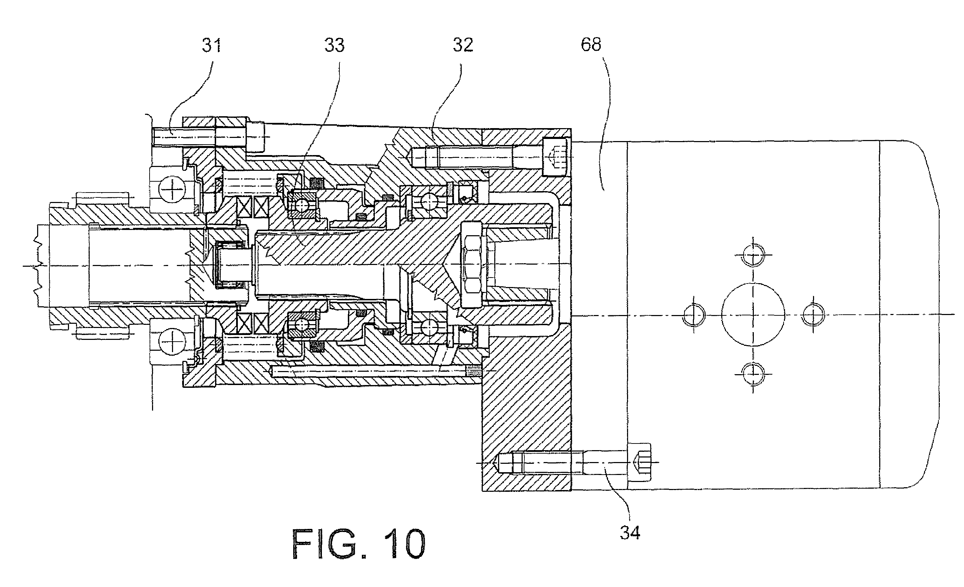

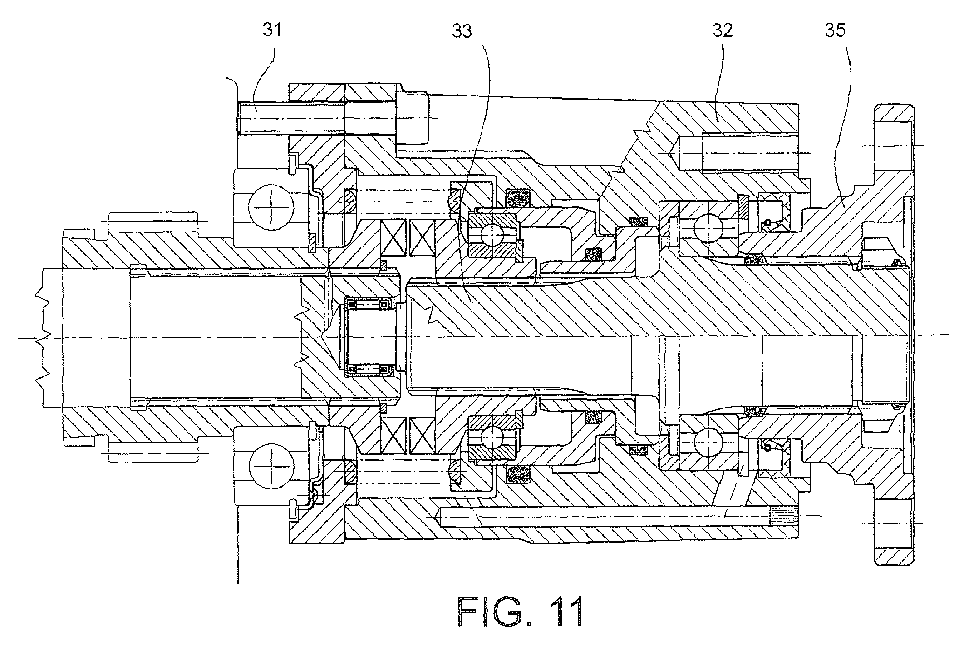

According to a possible embodiment, the power take-off PF is arranged at a second end 29 of the input shaft 14 opposite the first end 28 thereof. In this manner, the input shaft 14 can transmit the rotating speed thereof (that coincides with the speed ωᵢₙ) to the outer actuating means. In order to implement the connection to such outer actuating means, the housing 16 may comprise threaded seats 30 in which connecting screws 31 can be screwed. For example, with reference to Figs. 8-11, the outer actuating means may comprise a supporting structure 32 provided for the connection to the housing 16 through the screws 31. Such supporting structures 32 can, for example, rotatably support a drive shaft 33 rotatably integrally connectable to the input shaft 14 at the second end 29 thereof. To the supporting structure 32, for example, hydraulic pumps 340 of various kind can be connected through further screws 34 (Fig. 8-10), optionally with interposition of a flange 68, or a flange 35 for the mechanical connection to further rotating members -not shown (Fig. 11). When no actuating means is applied to the reduction unit 10, it is preferable to close the input to the input shaft 14 second end 29 trough a plug 37, for example, connected to the housing 16 via screws 31 or different connection means.

In accordance with an embodiment, the second reduction stage ST2 comprises a second reduction stage first toothed wheel 38 and a second reduction stage second toothed wheel 39 adapted to mutually engage. The second reduction stage first toothed wheel 38 is preferably rotatably integrally connected to the sleeve 18, while the second reduction stage second toothed wheel 39 can be rotatably integrally connected to (Fig. 3), or be manufactured as a single piece with (Fig. 12) an auxiliary shaft 40 that, in turn, is rotatably connected to the housing 16, for example, through further rolling bearings 41. The second stage first and second toothed wheels 39 and 40 thus implement the second constant transmission ratio τ2 between sleeve 18 the auxiliary shaft 40. Such second transmission ratio depends on the number of teeth provided in the second stage first and second toothed wheels.

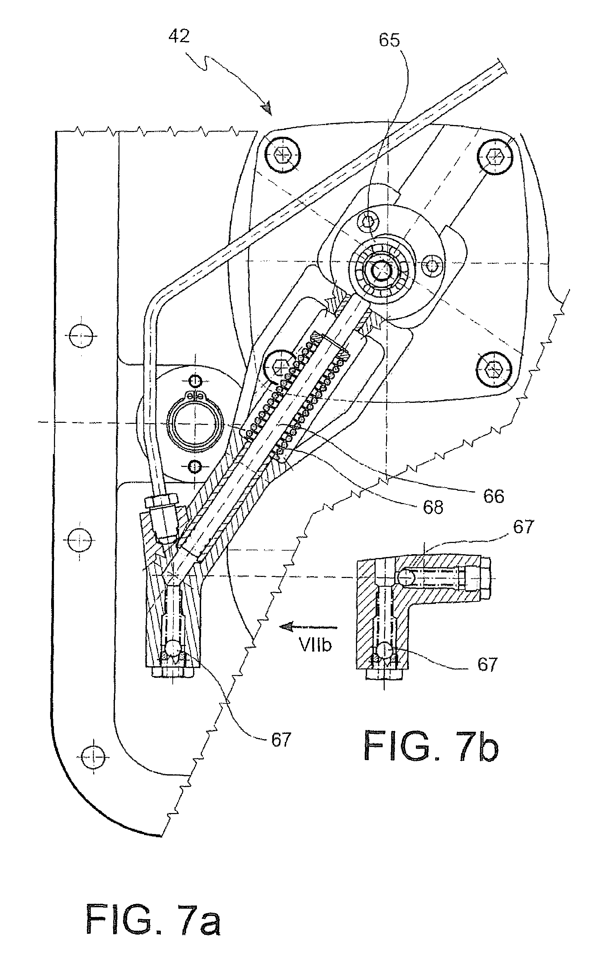

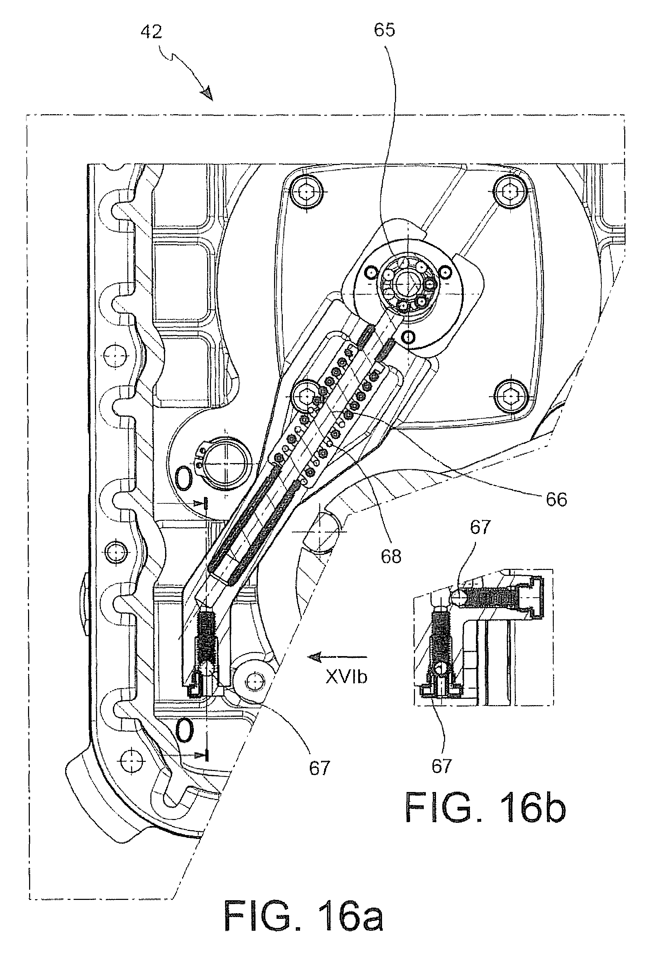

According to a possible embodiment, the auxiliary shaft 40 can be used to actuate a pump 42 which is adapted to pump lubricant fluid into the housing 16, so that the reduction unit 10 mechanisms are soaked in a suitably supplied oil bath (Figs. 3, 7a, 7b; Figs. 12, 16a, 16b). Advantageously, the pump 42 is so shaped as to be able to operate, that is to pump the lubricant fluid, to both the auxiliary shaft 40 rotating directions. In fact, the reduction unit 10 is advantageously suitable to operate both for the forward speeds, and for the reverse speeds of the vehicle 1. Therefore, also the auxiliary shaft 40 will be able to rotate according to two different rotating directions and, consequently, the pump 42 will have to be able to lubricate the reduction group for every rotating direction of the auxiliary shaft. Preferably, the pump 42 comprises a cam component 65 eccentrically rotatable relative to the auxiliary shaft rotation axis (Figs. 7A and 7b; Figs. 16a, 16 b). The eccentric rotations of the cam component 65, independently from the rotating direction, cause an alternate movement of a lubricant pumping piston 66, that is further subjected to the elastic force of elastic return means, for example a spring 68. Furthermore, non-return valves 67 adapted to ensure that the pumped lubricant runs the desired paths can be associated to the pump 42.

Advantageously, the third stage first ST3' and second ST3'' mechanisms respectively comprise third stage first 43 and second 44 toothed wheels (Figs. 3-5; Figs. 12-14). The third stage first toothed wheel 43 engages an auxiliary wheel 45 that is either rotatably integrally mounted on (Fig. 3) or implemented as one piece with (Fig. 12) the auxiliary shaft 40, while the third stage second toothed wheel 44 engages the second stage second toothed wheel 39, also rotatably integral to the auxiliary shaft 40 or implemented as a single piece therewith. As it shall be apparent to those skilled in the art, the second stage second auxiliary wheel 39 and the auxiliary wheel 45 rotate at the same angular speed, ω2, since they are integral to, or implemented as one piece with, the same shaft, the auxiliary shaft 40, and implement the two distinct third stage ST3' and ST3'' mechanisms, along with the third stage first and second wheels 43 and 44, respectively. Such distinct third stage ST3' and ST3'' mechanisms have the constant third stage first and second transmission ratios τ3' and τ3'', respectively, which are preferably mutually different. Consequently, when the auxiliary shaft 40 rotates at the speed ω2, the third stage first and second toothed wheels 43 and 44 rotate at the above-defined speeds ω3' and ω3'', respectively. The asynchronous movement of the third stage first and the second toothed wheels takes place simultaneously, therefore it cannot be transmitted to a same shaft.

In order to overcome such a problem, the synchronizer SYNCR advantageously connects alternately the third stage first 43 or second 44 toothed wheels to a sleeve 51 that is rotatably connected to the housing 16, for example, through further bearings 53. In this manner, it is avoided that the third stage first and second toothed wheels, mutually asynchronous, concomitantly act on the sleeve 51, and it is provided that only one of the third stage first and second mechanisms implements the reduction between auxiliary shaft 40 and sleeve 51. In addition, the synchronizer SYNCR can advantageously adopt an idle configuration, i.e. a configuration in which neither the third stage first toothed wheel 43, nor the third stage second toothed wheel 44 are rotatably integral to the sleeve 51. Such configuration is, for example, useful in the case where it is undesirable to transmit the motion from the engine to the driving wheels, but it is desirable to use the power take-off and keep the reduction unit 10 lubrication through the pump 42 active. The synchronizer SYNCR advantageously comprises an engaging member 50 which can be actuated by an actuator 47 in response to the third stage control action COM3 by the vehicle 1 user.

Associated to the sleeve 51, according to modes which will be described herein below, a first output shaft 46 is advantageously provided, which is rotatably connected to the housing 16 through further bearings 52.

The first power exit 12 is advantageously arranged at one end 48 of the first output shaft 46, which can be, for example, connected to one of the two output transmission shafts 9' and 9'' previously described. The connection between the first output shaft 46 and one of the output transmission shafts can take place, for example, via a flange 49 connectable to the output shaft end 48.

According to a possible embodiment, the reduction unit 50 comprises a second output shaft 54, at one end 55 of which the second power exit 13 is preferably arranged. In this manner, it is possible to connect the further output transmission shaft to the second output shaft 54 end 55, for example, via a further flange 57.

The second output shaft 54 is preferably coaxial with the first output shaft 46 and, even more preferably, it partially wraps it, so as to reduce the reduction unit overall dimensions. The second output shaft 54 is rotatably connected to the housing 16, for example, through further bearings 56. Between the first output shaft 46 and the second output shaft 54, particularly in the portion in which the second output shaft wraps the first output shaft, further bearings 69 are advantageously provided, so as to implement relative rotations between such two shafts.

Advantageously, the differential DIFF is operatively connected to the first output shaft 46, second output shaft 54, and sleeve 51, in such a manner that, according to a possible configuration thereof, the differential DIFF is adapted to differentiate the speeds of the output transmission shafts 9' and 9", which are connected to the first 46 and second 54 output shafts, and as a result, of the driving axles 3' and 3'' whenever the vehicle 1 operative conditions require it, as will be now explained.

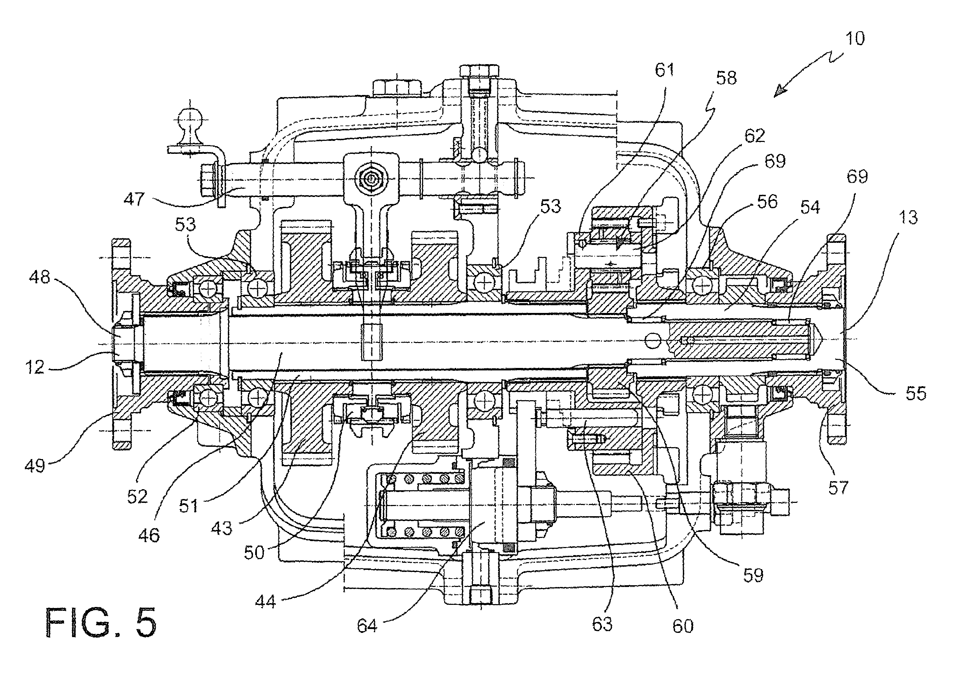

In accordance with an embodiment, the differential DIFF comprises a differential stage epicycloidal gear 58 having an inner wheel 59 with an outer toothing, an outer wheel 60 with an inner toothing, and a planet carrier 61 supporting satellite pinions 62 adapted to engage the inner wheel 59 outer toothing and the outer wheel 60 inner toothing. The planet carrier 61 is rotatably integral to the sleeve 51, the inner wheel 59 is rotatably integral to the first output shaft 46, and the outer wheel 60 is rotatably integral to the second output shaft 54. In such conditions, the differential stage epicycloidal gear 58 acts as a differential between the first output shaft 46 and the second output shaft 54. Following the differential control action of COM DIFF, a differential actuator 64 moves one or more, preferably three, fastening pins 63 so that these concomitantly engage the outer wheel 60 and the planet carrier 61, making them rotatably integrally (Fig. 5). In this manner, the first output shaft 46 and the second output shaft 54 are also made rotatably integrally, therefore the differential turns out to be locked.

It has to be noted that the described locking system of the differential, based on the pins 63 moving can, in accordance with a further embodiment, be replaced with a toothed clutch system 70 (Fig. 12), that ensures more reliable clutches, whatever the relative position between the inner wheel and the outer wheel of the differential stage epicycloidal device 58.

In view of the description provided above, those skilled in the art will be able to appreciate how the reduction unit according to the invention allows overcoming the drawbacks mentioned with reference to the prior art.

Particularly, those skilled in the art will be able to appreciate how the incorporation of the reduction unit according to the invention in a transmission in series to a standard gearbox allows obtaining, on the whole, a much higher number of speeds than the one provided by standard gearboxes, which much more reduced dimensions than those that a standard gearbox with an equal number of speeds would need. In fact, the first transmission stage provides a first transmission ratio which preferably takes two distinct values, and the third transmission stage provides a third transmission stage which also can preferably take two distinct values. Therefore, in this configuration the reduction unit is generally able to provide four speeds. Preferably, the reduction unit is able, in one condition of use thereof (related to specific control actions on the first and the third reduction stages), to provide a substantially unitary reduction and, in a further condition of use thereof, a reduction equal to about ¼. The further two configurations can be chosen between values intermediate between these two, according to the operative needs of the vehicle on which the transmission will be installed and on the available type of gearbox. Therefore, if the reduction unit is arranged, for example, in series to a gearbox having six speeds (apart from the reverse one), it shall be apparent that the transmission is able to provide, on the whole, twenty-four speeds, with much more reduced transmission overall dimensions than those which a standard gearbox with twenty-four ratios would have.

Furthermore, those skilled in the art will be able to appreciate how the maximum reduction configuration of the reduction unit, for example ¼, also in the presence of a standard gearbox, allows obtaining an extremely improved overall reduction, which is suitable to make the vehicle being able to reach very low speeds without much difficulty.

Furthermore, those skilled in the art will be able to appreciate how the reduction unit conformation is such, where needed, that it can be configured so as to provide a substantially unitary reduction ratio, therefore restoring those conditions that would be present with the standard gearbox only, therefore, suitable to the vehicle use on standard roads.

Furthermore, those skilled in the art will be able to appreciate the adjusting ease for a transmission in which the reduction unit according to the invention is inserted. In fact, it is possible, by acting on two different controls, to adjust the reduction unit configuration, of the first and third stages thereof, respectively, then operate on the speed gearbox, as on any vehicles. For example, to each combination of settings of the reduction unit, it is possible to associate a particular operative condition (for example highway, yard, sandy ground), to adopt where needed.

Finally, those skilled in the art will be able to appreciate how the reduction unit according to the invention can be associated to external actuating means, and can provide them with power both in the presence, and in the absence of a movement of the vehicle on which the transmission is installed.

To the above-described embodiments of the reduction unit according to the invention, those skilled in the art, to the aim of satisfying specific, contingent needs, will be able to make additions, modifications, or replacements of elements with others functionally equivalent, without however departing from the scope of the following claims.

## Claims

1. A reduction unit (10) for a transmission (5) of a vehicle (1), particularly an industrial vehicle, comprising:
- a power entrance (11) and two power exits (12, 13);
- a first reduction stage (ST1) of an epicycloidal type, operatively arranged in series to and downstream said power entrance (11), and having a first transmission ratio (τ1) which is variable in response to a first stage control action (COM1);
- a second reduction stage (ST2) operatively arranged in series to and downstream said first reduction stage (ST1), and having a constant second transmission ratio (τ2);
- a third reduction stage (ST3) operatively arranged in series to and downstream said second reduction stage (ST2), and having a third transmission ratio (τ3) which is variable in response to a third stage control action (COM3), said third reduction stage (ST3) comprising first (ST3') and second (ST3") stage mechanisms, having constant transmission ratios (τ3',τ3'') alternately engageable by a synchronizer (SYNCR);
- a differential (DIFF) of an epicycloidal type, operatively arranged downstream said third reduction stage (ST3) between said first (12) and second (13) power exits, and reversibly lockable in response to a differential control action (COM DIFF).

2. The reduction unit (10) according to claim 1, further comprising a power take-off (PF) operatively arranged upstream said first reduction stage (ST1).

3. The reduction unit (10) according to claim 1 or 2, wherein said first reduction stage (ST1) comprises an input shaft (14), and a sleeve (18) coaxial with said input shaft (14), said input shaft (14) and said sleeve (18) being operatively connected through a first stage epicycloidal gear (20) which is adapted to implement said variable first transmission ratio (τ1) between said input shaft (14) and said sleeve (18), in response to said first stage control action (COM1).

4. The reduction unit (10) according to the preceding claim, wherein said first stage epicycloidal gear (20) is of the satellite type, and the configuration thereof can be changed between a reduction configuration, in which said first stage epicycloidal gear (20) implements a speed reduction between said input shaft (14) and said sleeve (18), and a synchronism configuration, in which said first stage epicycloidal gear (20) keeps said input shaft (14) and said sleeve (18) synchronized, in response to said first control action (COM1).

5. The reduction unit (10) according to claim 3 or 4, when dependant on claim 2, wherein said power entrance (11) is arranged at a first end (28) of said input shaft (14) and said power take-off (PF) is arranged at a second end (29) of said input shaft (14) opposite the first end (28).

6. The reduction unit (10) according to any claim 3 to 5, wherein said second reduction stage (ST2) comprises a second reduction stage first toothed wheel (38) rotatably integral to said sleeve (18), and a second reduction stage second toothed wheel (39) engaging said second reduction stage first wheel (38) and which is rotatably integrally connected with an auxiliary shaft (40), or is manufactured as one piece therewith.

7. The reduction unit (10) according to the preceding claim, wherein said third reduction stage first (ST3') and second (ST3'') mechanisms comprise a third reduction stage first (43) and a second (44) toothed wheels, respectively, said third reduction stage first toothed wheel (43) engaging an auxiliary wheel (45) rotatably integrally connected to said auxiliary shaft (40), or manufactured as one piece therewith, and said third reduction stage second wheel (44) engaging said second reduction stage second wheel (39), in order to implement two distinct constant transmission ratios (τ3', τ3'').

8. The reduction unit (10) according to the preceding claim, wherein said synchronizer (SYNCR) rotatably integrally connects alternatively said third reduction stage first wheel (43) or said third reduction stage second wheel (44) with a sleeve (51) in response to said third stage control action (COM3), said synchronizer (SYNCR) being further able to take an idle configuration, in which both said third reduction stage first wheel (43) and said third reduction stage second wheel (44) are rotatably independent from said sleeve (51).

9. The reduction unit (10) according to the preceding claim, further comprising a first output shaft (46) operatively connected to said sleeve (51) through said differential (DIFF), wherein said first power exit (12) is arranged at one end (48) of said first output shaft (46).

10. The reduction unit (10) according the preceding claim, wherein said differential (DIFF) is further operatively connected to a second output shaft (54) which is coaxial with the first output shaft (46), said second power output (13) being arranged at one end (55) of said second output shaft (54).

11. The reduction unit (10) according to the preceding claim, wherein said differential (DIFF) comprises a differential stage epicycloidal gear (58) which is variable in the configuration thereof between a locking configuration, in which said differential stage epicycloidal gear (58) keeps the first (46) and the second (54) output shafts rotatably integral, and a differential configuration, in which said differential stage epicycloidal gear (58) allows relative rotations between the first (46) and the second (54) output shafts, in response to said differential control action (COM DIFF).

12. The reduction unit (10) according to any one of the claims 6 to 11, comprising a pump (42) adapted to pump lubricant fluid into the reduction unit (10), said pump (42) being actuatable under the action of said auxiliary shaft (40) rotations, and being so conformed as to be able to implement said pumping for each rotation direction of said auxiliary shaft (40).

13. A transmission (5) for industrial vehicles, comprising:
- a gearbox (6) connected or connectable to an engine (2);
- a reduction unit (10) according to any one of preceding claims, so arranged as to be able to receive power from said gearbox (6) at said power entrance (11) thereof;
- a first (3') and/or a second (3'') driving axles operatively connected to the reduction unit (10) so as to draw power at said first (12) and second (13) power exits, respectively.

14. The transmission (5) according to the preceding claim, further comprising one or more further differentials (7', 7'') on at least one of said first (3') and said second (3'') driving axles.
